# EUROPEAN PATENT APPLICATION

(11) **EP 3 050 733 A1**
(43) Date of publication of application: **03.08.2016**
(21) Application number: 14849238.2
(22) Date of filing: 12.09.2014
(51) Int. Cl.: B60K 7/00, B60L 3/00, H02K 11/00

(54) **WHEEL DRIVE DEVICE**

(30) Priority: 26.09.2013 JP 2013199341
(71) Applicant: NTN Corporation, Osaka-shi, Osaka 550-0003 (JP)
(72) Inventor: YAMADA, Wataru, Iwata-shi Shizuoka 438-0037 (JP)
(74) Representative: Hirsch & Associés
(86) International application number: PCT/JP2014/074206
(87) International publication number: WO 2015/045903

(57) **Abstract**

Provided is a wheel drive device that can suppress decrease in coil temperature detection accuracy and that can improve responsibility in controlling an electric motor. This wheel drive device includes an electric motor (1) configured to drive a wheel; a wheel bearing configured to transmit a rotation of the electric motor to the wheel and configured to rotationally support the wheel; and an oil supply mechanism configured to guide a lubricating oil, radially outward from inside a main shaft of the electric motor (1), the lubricating oil being also used for cooling, and configured to inject the lubricating oil to coils (78) of the electric motor (1). A temperature detector (Sa) configured to detect a temperature of the coils (78) is disposed above a center (L1) of the main shaft and in a gap (δ) between coils (78, 78) adjacent to each other in a circumferential direction.

## Description

### CROSS REFERENCE TO THE RELATED APPLICATION

This application is based on and claims Convention priority to Japanese patent application No. 2013-199341, filed September 26, 2013, the entire disclosure of which is herein incorporated by reference as a part of this application.

### BACKGROUND OF THE INVENTION

### (Field of the Invention)

The present invention relates to a wheel drive device to be used in a drive wheel such as in an electric vehicle.

### (Description of Related Art)

With respect to an in-wheel motor drive device, a technique has been proposed in which, in order to reduce overload on a motor which drives a wheel, a temperature of a coil of the motor is detected by a temperature detector, to limit a drive current for the motor (Patent Document 1). The in-wheel motor drive device cools the motor by guiding, radially outward from inside a main shaft, a part of lubricating oil which is also used for cooling, and by injecting the lubricating oil to the motor coil, for example.

### [Related Document]

### [Patent Document]

[Patent Document 1] JP Laid-open Patent Publication No. 2012-178917

In the in-wheel motor drive device, there are cases where, when such temperature detector gets wet with lubricating oil, the coil temperature detected by the temperature detector is lower than the actual coil temperature. If decrease of the accuracy in detecting the coil temperature cannot be suppressed under the wet influence of the lubricating oil mentioned above, responsibility in controlling the motor cannot be improved.

### SUMMARY OF THE INVENTION

An object of the present invention is to provide a wheel drive device that can suppress decrease of coil temperature detection accuracy, and that can improve responsibility in controlling an electric motor.

A wheel drive device of a first invention in the present invention is a wheel drive device including: an electric motor configured to drive a wheel; a wheel bearing configured to transmit a rotation of the electric motor to the wheel and configured to rotationally support the wheel; an oil supply mechanism configured to guide a lubricating oil, radially outward from inside a main shaft of the electric motor, the lubricating oil being also used for cooling, and configured to inject the lubricating oil to coils of a motor stator of the electric motor (configuration defined in preamble), and a temperature detector configured to detect a temperature of the coils and disposed above a center of the main shaft and in a gap between the coils adjacent to each other in a circumferential direction.

According to this configuration, the oil supply mechanism guides, radially outward from inside the main shaft of the electric motor, a part of the lubricating oil which is also used for cooling, and injects the lubricating oil to the coils of the electric motor. Accordingly, the electric motor is cooled. The lubricating oil having been injected to the coils moves, due to the gravity, to a lower portion along the stator and the like of the electric motor, for example. The temperature detector detects the temperature of the coils.

Since the temperature detector is disposed above the center of the main shaft and in the gap between the coils adjacent to each other in the circumferential direction, it is possible to prevent the temperature detector from directly receiving the injected lubricating oil, and in addition, it is possible to prevent the temperature detector from coming into contact with the lubricating oil moving along the stator and the like due to the gravity. Accordingly, decrease of the coil temperature detection accuracy can be suppressed, and responsibility in controlling the electric motor can be improved. Moreover, since the temperature detector is disposed in the gap between the coils, the temperature detector can be more easily disposed, than in a structure, for example, where the temperature detector is embedded in a coil bobbin or the like.

A wheel drive device of a second invention in the present invention is the device having the configuration defined in preamble of the first invention, and a temperature detector configured to detect the temperature of the coils and disposed above the center of the main shaft and on an end face, of one of the coils, that is on a radially outward side of the electric motor. Here, each coil may be wound about a direction orthogonal to the motor axis.

Since the temperature detector is disposed in this manner, it is possible to prevent the temperature detector from directly receiving the injected lubricating oil, and in addition, it is possible to prevent the temperature detector from coming into contact with the lubricating oil moving along the stator and the like due to the gravity. With this configuration, decrease of the coil temperature detection accuracy can be suppressed, and responsibility in controlling the electric motor can be improved.

The temperature detector and the coils may be impregnated with a resin material. As the resin material, an insulating varnish can be used, for example. In this case, it is possible to ensure the insulating property of the coils, and in addition, it is possible to more reliably prevent the temperature detector from coming into contact with the lubricating oil.

The wheel drive device may include a reducer configured to reduce a speed of rotation of the electric motor and to transmit resultant rotation to the wheel bearing. In this case, the oil supply mechanism may include an oil path configured to supply the lubricating oil to the reducer. Any one of the wheel drive devices described above may be an in-wheel motor drive device.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal cross-sectional view of an in-wheel motor drive device according to a first embodiment of the present invention;
Fig. 2 is a cross-sectional view of a reducer portion taken along a line II-II shown in Fig. 1;
Fig. 3 is a partial enlarged view of Fig. 2;
Fig. 4 is a cross-sectional view of a motor portion taken along a line IV-IV shown in Fig. 1;
Fig. 5 is a partial enlarged view of a part A shown in Fig. 4;
Fig. 6 is a block diagram showing a control system of the in-wheel motor drive device;
Fig. 7 is a longitudinal cross-sectional view of an in-wheel motor drive device according to another embodiment of the present invention;
Fig. 8 is a cross-sectional view of a motor portion taken along a line VIII-VIII shown in Fig. 7; and
Fig. 9 is an enlarged cross-sectional view of a characteristic portion of an in-wheel motor drive device according to still another embodiment.

### DESCRIPTION OF EMBODIMENTS

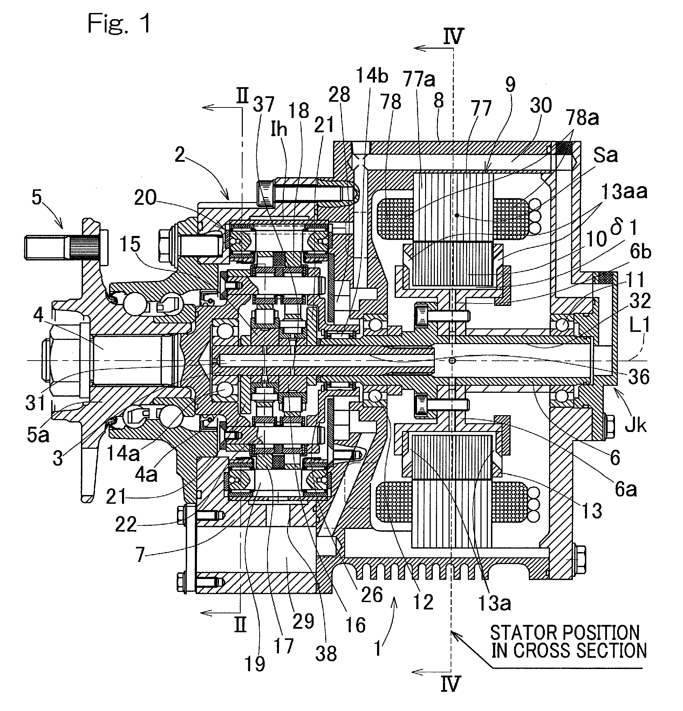

A wheel drive device A according to a first embodiment of the present invention will be described with reference to Fig. 1 to Fig. 6, using an in-wheel motor drive device as an example. As shown in Fig. 1, this in-wheel motor drive device includes; an electric motor 1 which drives a wheel (not shown); a reducer or reduction gear 2 which reduces the speed of rotation of the electric motor 1; a wheel bearing 5 which is rotated by an output member 4 being coaxial with an input shaft 3 (referred to as reducer input shaft 3) of the reducer 2; temperature detector Sa; and an oil supply mechanism Jk. The reducer 2 is interposed between the wheel bearing 5 and the electric motor 1, and the hub of a wheel being a drive wheel supported by the wheel bearing 5 is coaxially coupled with a motor rotation shaft 6 of the electric motor 1.

A suspension (not shown) of the vehicle is coupled with a reducer housing 7 which houses the reducer 2. It should be noted that hereinafter in this specification, the term "outboard" represents one side of the vehicle body away from the longitudinal center of the vehicle body and the term "inboard" represents the other side of the vehicle body close to the longitudinal center of the vehicle body, when the in-wheel motor drive device is supported in the vehicle.

The electric motor 1 is a radial-gap-type IPM motor (so-called interior permanent magnet synchronous motor) in which a radial gap is provided between a motor stator 9 fixed to a motor housing 8 and a motor rotor 10 installed to a motor rotation shaft 6. In the motor housing 8, bearings 11 and 12 are provided so as to be spaced from each other along the axial direction, and the motor rotation shaft 6 being the main shaft is rotatably supported by the bearings 11 and 12. The motor rotation shaft 6 transmits a drive force of the electric motor 1 to the reducer 2. A flange portion 6a extending radially outward is provided about an axially intermediate portion of the motor rotation shaft 6, and the motor rotor 10 is mounted to the flange portion 6a via a rotor fixing member 13.

One end in the axial direction of the reducer input shaft 3 extends in the motor rotation shaft 6 and is in spline-fit with the motor rotation shaft 6. A bearing 14a is fitted in a cup portion 4a of the output member 4, and a bearing 14b is fitted in a cylindrical coupling member 26 coupled to the cup portion 4a via inner pins 22. The reducer input shaft 3 is rotatably supported by the bearings 14a, 14b, 11, and 12. Thus, the reducer input shaft 3 and the motor rotation shaft 6 are, while integrally fitted, rotatably supported by the bearings 11, 12, 14a, and 14b. Eccentric segments 15 and 16 are provided on the outer peripheral surface of the reducer input shaft 3 in the reducer housing 7. The eccentric segments 15 and 16 are provided, 180° out of phase with each other, such that the respective centrifugal forces caused by eccentric motions of the eccentric segments 15 and 16 can be canceled with each other.

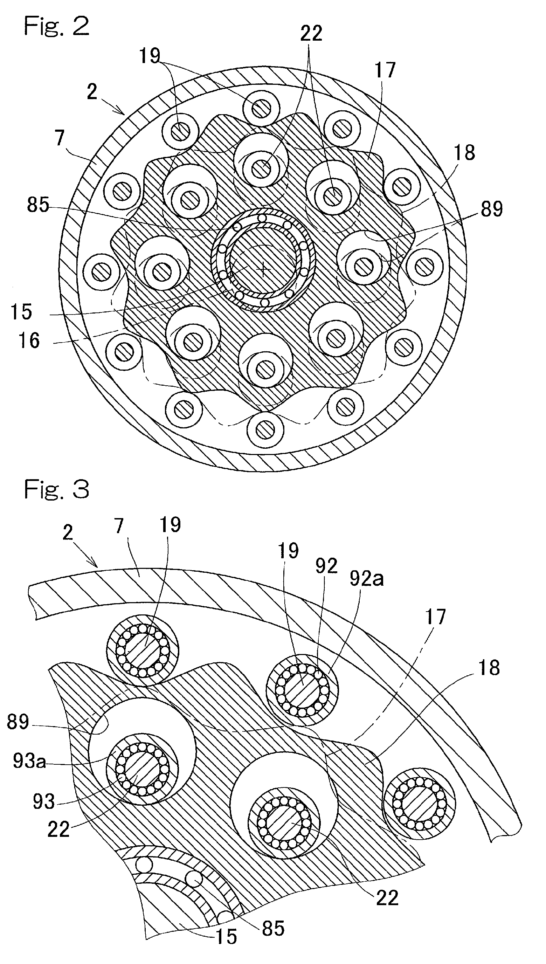

The reducer 2 is a cycloid reducer which includes: an outer pin housing Ih; curvilinear plates 17 and 18; a plurality of outer pins 19; a motion converter mechanism 20; and a counterweight 21. Fig. 2 is a cross-sectional view showing the reducer portion taken along a line II-II shown in Fig. 1. In the reducer 2, the curvilinear plates 17 and 18 each having an outer shape formed in a gentle wavy trochoid curve are mounted to the eccentric segments 15 and 16 via a bearing 85. A plurality of outer pins 19 which guide, on the outer periphery side thereof, eccentric motions of the curvilinear plates 17 and 18 are provided inside the reducer housing 7. A plurality of inner pins 22 mounted to the cup portion 4a (Fig. 1) are respectively inserted in and engaged with a plurality of circular through-holes 89 which are formed in the curvilinear plates 17 and 18.

As shown in the enlarged view in Fig. 3, each outer pin 19 has a bearing 92 fitted thereto and each inner pin 22 has a bearing 93 fitted thereto. In addition, each outer pin 19 is supported by an outer ring 92a of the bearing 92 at both ends, and thus, is in rolling contact with the outer peripheral surfaces of the curvilinear plates 17 and 18 via the bearing 92. In addition, an outer ring 93a of the bearing 93 fitted to each inner pin 22 is in rolling contact with the inner periphery of each through-hole 89 of the curvilinear plates 17 and 18. Thus, the contact friction between each outer pin 19 and the outer peripheries of the curvilinear plates 17 and 18, and the contact friction between each inner pin 22 and the inner periphery of each through-hole 89 can be reduced. Thus, the eccentric motions of the curvilinear plates 17 and 18 can be smoothly transmitted as a rotary motion to an inner member 5a of the wheel bearing 5, as shown in Fig. 1. That is, when the motor rotation shaft 6 rotates, the curvilinear plates 17 and 18 provided at the reducer input shaft 3 which rotates integrally with the motor rotation shaft 6 perform the respective eccentric motions. At this time, each outer pin 19 engages, in rolling contact, with the outer peripheral surfaces of the curvilinear plates 17 and 18 performing eccentric motions. In addition, with respect to the curvilinear plates 17 and 18, due to the engagement between each inner pin 22 and its corresponding through-hole 89, only the rotation motions of the curvilinear plates 17 and 18 are transmitted as the rotary motion to the output member 4 and the inner member 5a of the wheel bearing 5. As a result, the speed of rotation of the inner member 5a is reduced relative to the speed of rotation of the motor rotation shaft 6.

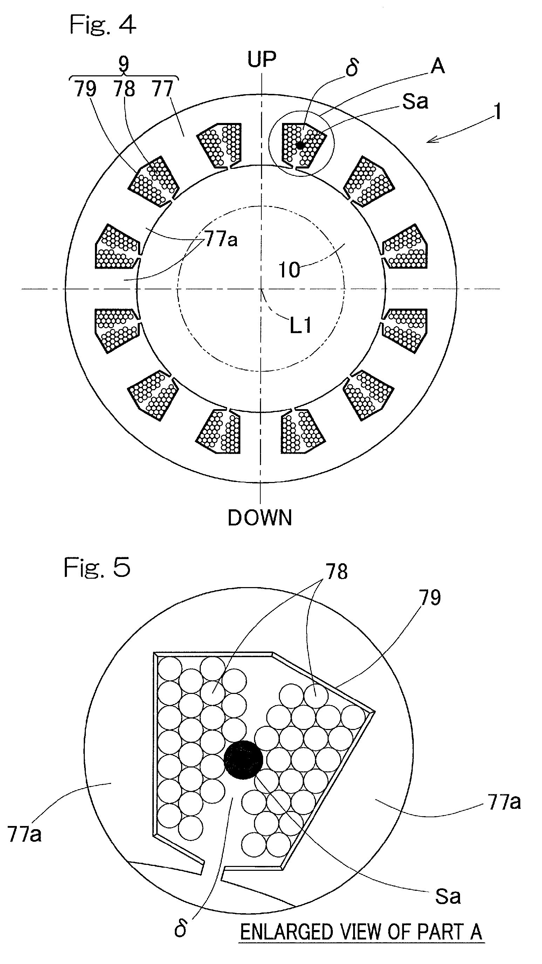

Fig. 4 is a cross-sectional view of the motor portion taken along a line IV-IV shown in Fig. 1. The motor rotor 10 of the electric motor 1 includes, for example: a core portion (not shown) made of a soft magnetic material; and a permanent magnet (not shown) provided in the core portion. As the permanent magnet, a neodymium magnet is used, for example. The motor stator 9 includes, for example: a stator core portion 77 made of a soft magnetic material; coils 78; and insulating members 79. The stator core portion 77 has a ring shape whose outer peripheral surface is circular in cross section. Inside the inner peripheral surface of the stator core portion 77, a plurality of teeth 77a protruding radially inwards are formed so as to be arranged along the circumferential direction.

Each coil 78 is wound around its corresponding tooth 77a of the stator core portion 77. In addition, the coil 78 is wound about a direction orthogonal to a motor axis L1. As shown in Fig. 1, each coil 78 wound around its corresponding tooth 77a includes coil ends 78a which protrude toward the inboard side and the outboard side relative to the widthwise ends of the stator core portion 77, respectively. To the coil ends 78a, lubricating oil is injected from the oil supply mechanism Jk described later.

Fig. 5 is a partial enlarged view of a part A shown in Fig. 4. As shown in Fig. 5, between teeth 77a, 77a adjacent to each other in the circumferential direction, and in a gap δ between the coils 78 adjacent to each other in the circumferential direction, the temperature detector Sa which detects the temperature of the coils 78 is disposed. The temperature detector Sa is disposed above the center L1 of the motor rotation shaft 6 (Fig. 1). The coils 78, 78 adjacent to each other are surrounded, together with the temperature detector Sa, by an insulating member 79 made of an insulating material. As the temperature detector Sa, a thermistor or a thermocouple is used, for example. In particular, as the temperature detector Sa to be used in a vehicle, a thermistor, whose cost is lower and which is more robust than a thermocouple, is preferably used.

As shown in Fig. 1, the oil supply mechanism Jk is an axial oil supply mechanism which supplies lubricating oil to be used both in lubrication for the reducer 2 and in cooling of the electric motor 1. The oil supply mechanism Jk includes a lubricating oil flow path 30, a motor shaft oil path 32, a reducer oil path 31, and an oil pump 28. The lubricating oil flow path 30 is provided in the motor housing 8, and the motor shaft oil path 32 is provided along the axis of the motor rotation shaft 6 of the electric motor 1 and is in communication with the lubricating oil flow path 30. The reducer oil path 31 is provided in the reducer 2 and is in communication with the motor shaft oil path 32 and a lubricating oil storage portion 29, thereby supplying the lubricating oil to the reducer 2.

The reducer oil path 31 includes an input shaft oil path 36, an oil supply hole 37, and an oil discharge hole 38. The input shaft oil path 36 is in communication with the motor shaft oil path 32, and extends in the axial direction inside the reducer input shaft 3 from the inboard-side end toward the outboard side. The oil supply hole 37 extends radially outward from a position, in the axial direction, in the input shaft oil path 36, where the eccentric segments 15 and 16 are provided. The reducer housing 7 is provided with the oil discharge hole 38 which discharges, to the lubricating oil storage portion 29, the lubricating oil having been used in lubrication of the reducer 2.

The oil pump 28 sucks the lubricating oil stored in the lubricating oil storage portion 29, from a suction hole in the lubricating oil storage portion 29, and circulates the lubricating oil via the lubricating oil flow path 30 to the motor shaft oil path 32 and the reducer oil path 31. The oil pump 28 is a cycloid pump which includes, for example: an inner rotor which rotates in association with the rotation of the output member 4; an outer rotor which rotates in a following manner in association with the rotation of the inner rotor; a pump chamber; a suction port; and a discharge port, which are not shown. When the inner rotor rotates in association with the rotation of the output member 4 driven by the electric motor 1, the outer rotor rotates in a following manner. Since the inner rotor and the outer rotor rotate respectively about different rotation axes at that time, a volume of the pump chamber is continuously varied.

Accordingly, the lubricating oil stored in the lubricating oil storage portion 29 is sucked through the suction port, and then is pressure-fed through the discharge port into the lubricating oil flow path 30. The lubricating oil is guided from the lubricating oil flow path 30 to the motor shaft oil path 32. A part of the lubricating oil is guided from the motor shaft oil path 32 into an annular gap δ1 via through-hole 6b extending radially outward from the motor rotation shaft 6. A part of the lubricating oil passes from the annular gap δ1 through an oil path 13a which extends radially outward and which is formed in the rotor fixing member 13, whereby the motor rotor 10 is cooled.

Further, from oil blowing holes 13aa of the oil path 13a, the lubricating oil is injected to the inner peripheral surfaces of the coil ends 78a under the centrifugal force of the motor rotor 10 and the pressure from the oil pump 28, whereby the coils 78 are cooled. Accordingly, the entirety of the electric motor 1 is cooled. The lubricating oil having been used in this cooling moves downwardly due to the gravity, drops into a lower portion of the motor housing 8, and then, is stored in the lubricating oil storage portion 29 which is in communication with the lower portion of the motor housing 8.

The lubricating oil guided from the motor shaft oil path 32 to the oil supply hole 37 lubricates the inside of the reducer 2. Centrifugal force acts on the lubricating oil discharged from the outer-diameter-side opening end of the oil supply hole 37, and thus, the lubricating oil moves radially outward in the reducer housing 7 while lubricating portions to be lubricated in the reducer 2. Then, the lubricating oil moves downwardly due to the gravity, to be stored in the lubricating oil storage portion 29 through the oil discharge hole 38.

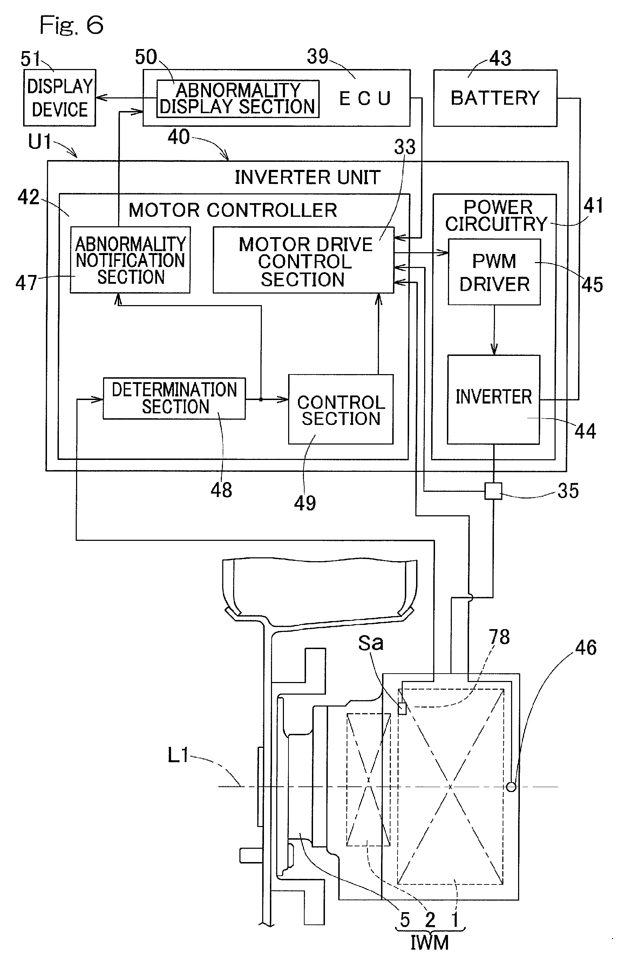

Fig. 6 is a block diagram showing a control system of the in-wheel motor drive device. A control device U1 includes: an ECU 39 which is an electrical control unit performing comprehensive or entire control of the vehicle; and an inverter unit 40 which controls the electric motor 1 for traveling in accordance with commands from the ECU 39. The inverter unit 40 includes: a power circuitry 41 provided in each electric motor 1; and a motor controller 42 which controls the power circuitry 41. The motor controller 42 has a function of outputting, to the ECU 39, various types of information held in the motor controller 42, such as detected values or control values regarding the in-wheel motor (IWM) which includes the electric motor 1, the reducer 2 and the wheel bearing 5.

The power circuitry 41 includes: an inverter 44 which converts a DC power from a battery 43 into a three-phase AC power to be used to drive the electric motor 1; and a PWM driver 45 which controls the inverter 44. The inverter 44 includes a plurality of semiconductor switching elements (not shown), and the PWM driver 45 performs pulse width modulation on an inputted current command and sends ON/OFF commands to the semiconductor switching elements.

The motor controller 42 includes a computer, programs which are executed by the computer, and electronic circuits. The motor controller 42 includes a motor drive control section 33 as a basic control section. The motor drive control section 33 performs conversion of an acceleration/deceleration command such as a torque command sent from the ECU 39 being primary control unit into a current command, and sends the current command to the PWM driver 45. The motor drive control section 33 obtains, from a current detector 35, a motor current value that is to be provided from the inverter 44 to the electric motor 1, thereby performing current feedback control. The motor drive control section 33 obtains the rotation angle of the motor rotor 10 in the electric motor 1 from an angle sensor 46, thereby to perform vector control.

Further, the motor controller 42 is provided with abnormality notification section 47, a determination section 48, and a control section 49. The determination section 48 determines whether or not the temperature of the coils 78 detected by the temperature detector Sa has exceeded a predetermined threshold value. The threshold value is obtained as appropriate through an experiment or simulation, for example, based on the relationship between the temperature of the coils 78 and the time, which causes insulation at coils 78. Whether or not insulation has occurred at the coils 78 can be determined by comparing a motor current value corresponding to a motor voltage applied to the electric motor 1, with a reference value in the case of no insulation.

When it has been determined that the detected temperature of the coils 78 has exceeded the threshold value, the control section 49 instructs the power circuitry 41, through the motor drive control section 33, to reduce the current value for the electric motor 1, by a predetermined proportion to the present current or by a predetermined value, for example. When the determination section 48 has determined that the temperature of the coils 78 had exceeded the threshold value, the abnormality notification section 47 outputs an information indicating the abnormality to the ECU 39. In response to the information indicating the abnormality outputted from the abnormality notification section 47, abnormality display section 50 provided in the ECU 39 causes, for example, a display device 51 provided in a dashboard or the like of the vehicle, to show a presentation that indicates the abnormality.

The operation and advantageous effect will be described. According to the in-wheel motor drive device described above, the oil supply mechanism Jk causes a part of the lubricating oil to pass through the motor shaft oil path 32, and then sequentially, through the through-hole 6b, the annular gap δ1, and the oil path 13a, whereby the motor rotor 10 is cooled. Further, from the oil blowing holes 13aa of the oil path 13a, the lubricating oil is injected to the inner peripheral surfaces of the coil ends 78a under the centrifugal force of the motor rotor 10 and the pressure from the oil pump 28, whereby the coils 78 are cooled. Accordingly, the entirety of the electric motor 1 is cooled. The lubricating oil having been injected to the coils 78 moves to the lower portion along the motor stator 9 and the like due to the gravity.

When it has been determined that the temperature of the coils 78 detected by the temperature detector Sa had exceeded the threshold value, the control section 49 instructs the power circuitry 41, through the motor drive control section 33, to reduce the current value for the electric motor 1, by a predetermined proportion to the present current or by a predetermined value, for example. Since the temperature detector Sa is disposed above the center L1 of the motor rotation shaft 6 and in the gap δ between the coils 78, 78 adjacent to each other in the circumferential direction, it is possible to prevent the temperature detector Sa from directly receiving the injected lubricating oil, and in addition, it is possible to prevent the temperature detector Sa from coming into contact with the lubricating oil moving along the motor stator 9 and the like due to the gravity. Accordingly, decrease of the coil temperature detection accuracy can be suppressed, and responsibility in controlling the electric motor 1 can be improved. Moreover, since the temperature detector Sa is disposed in the gap δ between the coils 78, 78, the temperature detector Sa can be more easily disposed, than in a structure, for example, where the temperature detector Sa is embedded in a coil bobbin or the like.

Other embodiments will be described. In the following description, the components corresponding to the matters described in the preceding embodiment are denoted by like reference numerals, and the details thereof may not be reiterated. When only a part of the configuration is described, the other part of the configuration is the same as described in the preceding description unless otherwise specified. The same operation and effect can be obtained from the same configuration. A combination of parts that are specifically described in the embodiments can be implemented, and further, the embodiments may be partially combined unless such combinations cause any problem.

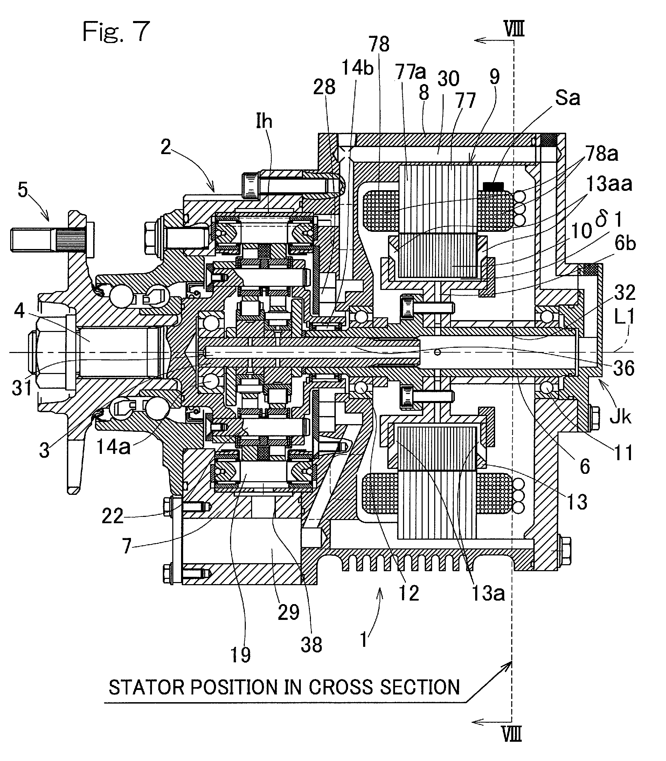

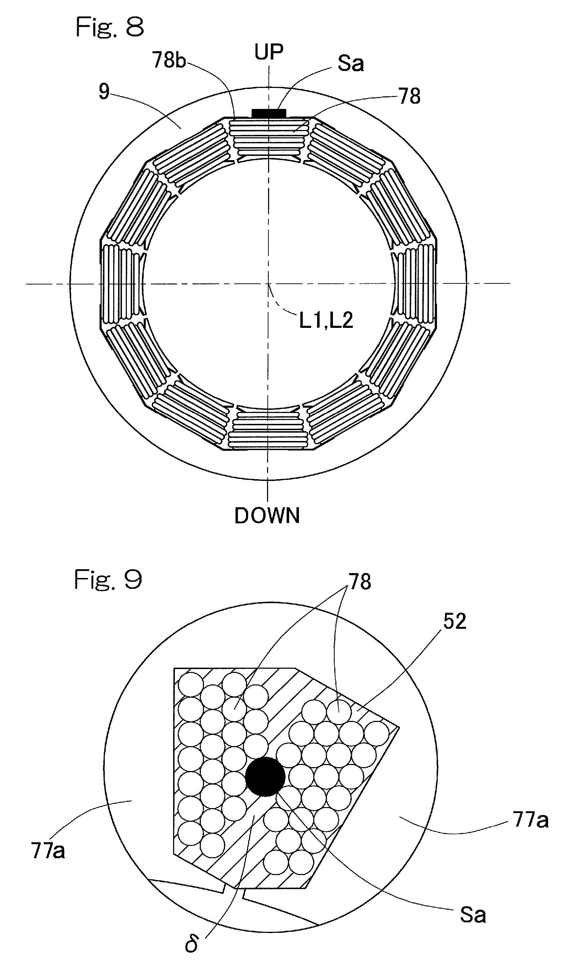

Fig. 7 is a cross-sectional view of an in-wheel motor drive device according to another embodiment of the present invention. Fig. 8 is a cross-sectional view of the motor portion taken along a line VIII-VIII shown in Fig. 7. As shown in Fig. 7 and Fig. 8, each coil 78 may be wound about a direction orthogonal to the motor axis L1, and the temperature detector Sa may be disposed above the center L1 of the motor rotation shaft 6 and on an end face 78b (Fig. 8), of one coil end 78a, which is on the radially outward side of the electric motor. Since the temperature detector Sa is disposed in this manner, it is possible to prevent the temperature detector Sa from directly receiving the injected lubricating oil, and in addition, it is possible to prevent the temperature detector Sa from coming into contact with the lubricating oil moving along the motor stator 9 and the like due to the gravity.

Fig. 9 shows still another embodiment in which a resin material 52 is provided instead of the insulating member 79 of the motor stator 9 in the first embodiment shown in Figs. 1 to 6. As shown in Fig. 9, the temperature detector Sa and the coils 78 may be impregnated with the resin material 52. As the resin material 52, an insulating varnish can be used, for example. In this case, it is possible to ensure the insulating property of the coils 78, and in addition, it is possible to more reliably prevent the temperature detector Sa from coming into contact with the lubricating oil. In the configuration shown in Fig. 9, the temperature detector Sa and the coils 78 may be impregnated with a resin material.

The coil 78 wound around a bobbin which is not shown in Figs. 1 to 9 may be used. The oil pump 28 may be provided outside the housings 7, 8 in the in-wheel motor drive device, and the oil pump 28 may be driven by a drive source different from that used for the in-wheel motor drive device.

The wheel drive device A according to the present invention has been described using the in-wheel motor drive device as an example, but not being limited thereto, the wheel drive device A may be of an on-board type. With respect to the wheel drive device A, an example has been shown in which a cycloid-type reducer is used, but not being limited thereto, a planetary reducer, a parallel shaft reducer, or another type of reducer may be used. Further, the wheel drive device A may be of a so-called direct motor type which does not use a reducer. In the present specification, the term "electric vehicle" represents a concept that encompasses all types of vehicles that obtain drive force from an electric power, and thus, should be construed as including, for example, hybrid cars or the like that use the in-wheel motor drive device A and an internal combustion engine in combination.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included within the scope.

### [Reference Numerals]

1 ···· electric motor
2 ···· reducer
5 ···· wheel bearing
6 ···· motor rotation shaft (main shaft)
31 ···· reducer oil path
52 ···· resin material
78 ···· coil
Jk ···· oil supply mechanism
Sa ···· temperature detector
δ···· gap
IWM ···· in-wheel motor

## Claims

1. A wheel drive device comprising:
an electric motor configured to drive a wheel;
a wheel bearing configured to transmit a rotation of the electric motor to the wheel and configured to rotationally support the wheel;
an oil supply mechanism configured to guide a lubricating oil, radially outward from inside a main shaft of the electric motor, the lubricating oil being also used for cooling, and configured to inject the lubricating oil to coils of a motor stator of the electric motor, and
a temperature detector configured to detect a temperature of the coils and disposed above a center of the main shaft and in a gap between the coils adjacent to each other in a circumferential direction, or disposed above the center of the main shaft and on an end face, of one of the coils, that is on a radially outward side of the electric motor.

2. The wheel drive device as claimed in claim 1, wherein
the temperature detector and the coils are impregnated with a resin material.

3. The wheel drive device as claimed in claim 1 or 2, further comprising
a reducer configured to reduce a speed of rotation of the electric motor and to transmit resultant rotation to the wheel bearing.

4. The wheel drive device as claimed in claim 3, wherein
the oil supply mechanism includes an oil path configured to supply the lubricating oil to the reducer.

5. The wheel drive device as claimed in any one of claims 1 to 4, wherein
the electric motor is an in-wheel motor, and
the wheel drive device is an in-wheel motor drive device.
